# EUROPÄISCHE PATENTANMELDUNG

(11) **EP 4 187 122 A1**
(43) Veröffentlichungstag der Anmeldung: **31.05.2023**
(21) Anmeldenummer: 22197918.0
(22) Anmeldetag: 27.09.2022
(51) Int. Cl.: F16F 13/06

(54) **MOTORLAGER**

(30) Priorität: 30.11.2021 DE 102021213546
(71) Anmelder: ContiTech Vibration Control GmbH, 30165 Hannover (DE)
(72) Erfinder: Busch, Jirka, 30165 Hannover (DE)
(74) Vertreter: Continental Corporation

(57) **Zusammenfassung**

Die Erfindung betrifft ein Motorlager (1), aufweisend eine Hydroeinheit (3) und ein Gehäuse (2), wobei die Hydroeinheit (3) mindestens ein Hydroelement (4) und mindestens ein Gummielement (5) umfasst und wobei Gehäuse (2) und Hydroeinheit (3) miteinander fest verbunden sind. Der Erfindung lag die Aufgabe zugrunde, ein Motorlager (1) zu schaffen, bei dem die Montage von Hydroeinheit (3) und Gehäuse (2) vereinfacht ist. Diese Aufgabe wird dadurch gelöst, dass die Hydroeinheit (3) eine Aussparung oder einen Hinterschnitt (9) aufweist und dass das Gehäuse (2) ein Federelement (10) aufweist und die Ausssparung oder der Hinterschnitt (9) der Hydroeinheit (3) in montiertem Zustand mit dem Federelement (10) des Gehäuses (2) in Eingriff steht, sodass zwischen Hydroeinheit (3) und Gehäuse (2) eine feste, formschlüssige Verbindung (13) ausgebildet ist.

## Beschreibung

Die Erfindung betrifft ein Motorlager, aufweisend eine Hydroeinheit und ein Gehäuse, wobei die Hydroeinheit mindestens ein Hydroelement und mindestens ein Gummielement umfasst und wobei Gehäuse und Hydroeinheit miteinander fest verbunden sind.

Für die Lagerung von Motoren in Kraftfahrzeugen werden häufig Gummi-Metalllager und heute bevorzugt Hydrolager eingesetzt. Klassischerweise wird hierbei die Hydroeinheit mit Gummielement und Drosselpaket als eine Einheit in ein Gehäuse eingesetzt und fixiert. Das Gehäuse besteht dabei oft aus Aluminium, kann aber auch aus Kunststoff oder einem anderen Material ausgebildet sein.

Die Verbindung und Fixierung der Hydroeinheit im Gehäuse erfolgt derzeit üblicherweise durch Verstemmen oder Verbördeln, es sind aber auch Rastverbindungen bekannt. Bei den Rastverbindungen rasten üblicherweise hakenförmige Elemente an der Hydroeinheit in korrespondierende Aussparungen oder Hinterschnitte am Gehäuse ein. Da die Haken bei der Montage aus der Oberfläche der Hydroeinheit herausragen müssen, kann es bei der Montage zu Deformationen der Haken kommen, sodass eine zuverlässige Verbindung der Hydroeinheit mit dem Gehäuse nicht mehr gewährleistet ist.

Es ist auch denkbar, dass die Hydroeinheit Rastfedern aufweist, die beispielsweise an einer Metallplatte an der Hydroeinheit angeordnet sind, wobei die Rastfedern beispielsweise als Federzunge ausgebildet sein können.

Der Erfindung lag die Aufgabe zugrunde, ein Motorlager zu schaffen, bei dem die Montage von Hydroeinheit und Gehäuse vereinfacht ist.

Diese Aufgabe wird dadurch gelöst, dass die Hydroeinheit eine Aussparung oder einen Hinterschnitt aufweist und dass das Gehäuse ein Federelement aufweist und die Ausssparung oder der Hinterschnitt der Hydroeinheit in montiertem Zustand mit dem Federelement des Gehäuses in Eingriff steht, sodass zwischen Hydroeinheit und Gehäuse eine feste, formschlüssige Verbindung ausgebildet ist.

Diese Anordnung hat den Vorteil, dass die Hydroeinheit deutlich vereinfacht herstellbar ist, da im Gehäuse deutlich mehr Bauraum zur Ausbildung eines Federelements zur Verfügung steht als in der Hydroeinheit.

In einer Weiterbildung der Erfindung ist die Aussparung oder der Hinterschnitt an der Hydroeinheit direkt im Gummielement ausgebildet.

In einer Weiterbildung der Erfindung ist die Aussparung oder der Hinterschnitt in einer Befestigungsplatte angeordnet, die fest mit dem Gummielement der Hydroeinheit verbunden ist.

Da bei der erfindungsgemäßen Rastverbindung das Federelement im Gehäuse angeordnet ist, ist eine zuverlässige Verrastung sowohl mit als auch ohne zusätzliche Elemente wie Metallplatten oder ähnlichem zwischen Federelement und dem korrespondierenden Ausschnitt oder Hinterschnitt des Gummielement möglich. Dias Federelement kann direkt im ausgeformten Gummi einrasten. Bei höheren Belastungen kann die Verwendung einer Befestigungsplatte aus Metall mit entsprechender Aussparung oder Hinterschnitt vorteilhaft sein.

Die Anordnung der Aussparung oder des Hinterschnitts am oder im Gummielement der Hydroeinheit hat den Vorteil, dass Aussparung oder Hinterschnitt direkt bei der Vulkanisation des Gummielementes mit anformbar sind. Die Anvulkanisation einer Metallplatte ist dabei ebenfalls einfach realisierbar, da Federfunktionen bei der Vulkanisation des Gummielements der Hydroeinheit keine Beachtung finden müssen.

In einer Weiterbildung der Erfindung ist die Aussparung oder der Hinterschnitt am Hydroelement der Hydroeinheit angeordnet.

Diese Anordnung kann als Alternative zur Anordnung der Aussparung oder des Hinterschnittes dienen, so dass die Montage des Motorlagers in einer Vielzahl von Einbaulagen verwendet werden kann.

In einer Weiterbildung der Erfindung ist das Federelement im Gehäuse als Federzunge aus Metall ausgebildet.

Dieser Ausblick hat den Vorteil, dass einerseits Metall eine hohe Federsteifigkeit besitzt und, bei Ausbildung des Gehäuses aus Metall, einstückig mit dem Gehäuse verbunden sein kann.

In einer Weiterbildung der Erfindung ist das Federelement als separates Bauteil mit dem Gehäuse fest verbunden.

Diese Anordnung hat den Vorteil, dass auch aus bei Gehäusen aus nichtmetallischen Werkstoffen ein metallisches Federelement zur Verfügung gestellt werden kann.

Anhand der Zeichnung wird nachstehend ein Beispiel der Erfindung näher erläutert. Es zeigt
Fig. 1 ein erfindungsgemäßes Motorlager 1 in einer Prinzipskizze und
Fig. 2 einen Ausschnitt des Gehäuses 2, der für die Aufnahme einer Hydroeinheit vorgesehen ist.

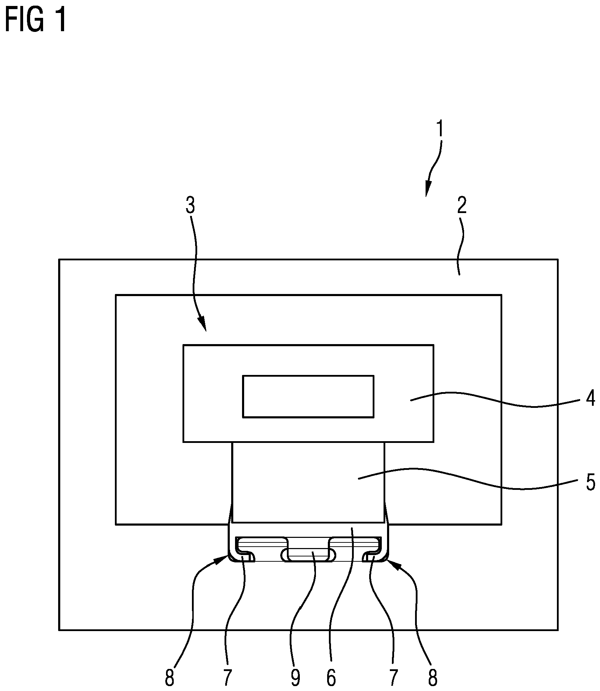

Die Fig.1 zeigt ein erfindungsgemäßes Motorlager 1 in einer Prinzipskizze. Das Motorlager 1 weist ein Gehäuse 2 und eine Hydroeinheit 3 auf, wobei die Hydroeinheit 3 aus einem hydraulischen Dämpfungselement 4 und aus einem Gummielement 5 besteht.

Das Hydroelement 3 ist mittels einer Befestigungsplatte 6 am Gehäuse 2 befestigt. Die Befestigungsplatte 6 weist 2 Führungsschienen 7 auf, die in korrespondierende Führung Nuten 8 des Gehäuses 2 eingreifen und weist außerdem eine Rastnase 9 auf.

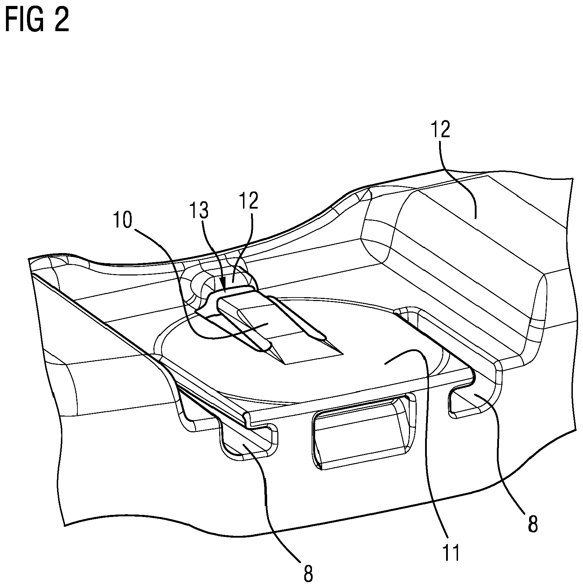

Die Fig. 2 zeigt einen Ausschnitt des Gehäuses 2 mit den Führungsnadel 8. Die Hydroeinheit mit Befestigungsplatte ist hier nicht gezeigt. Eine Federzunge 10 ragt aus der für die Befestigung der Hydroeinheit vorgesehenen Fläche 11 heraus und ist in ihrer Länge so bemessen, dass zwischen Federzunge 10 und einem Anschlag 12 ein Spalt 13 verbleibt.

Beim Einschieben der hier nicht gezeigten Befestigungsplatte in die Führung Nuten 8 wie die Federzunge 10 durch die Rastnase der Befestigungsplatte elastisch in Richtung auf die Fläche 11 niedergedrückt. Ist die vorgesehene Position der Hydroeinheit erreicht, stößt die Befestigungsplatte mit der Rastnase gegen den Anschlag 12, die Federzunge 10 federt hinter der Rastnase der Befestigungsplatte zurück. Die Rastnase der Befestigungsplatte ist dadurch in dem Spalt 13 arretiert und die Hydroeinheit ist sicher mit dem Gehäuse 2 verbunden.

### Bezugszeichenliste

### (Teil der Beschreibung)

- 1: Motorlager
- 2: Gehäuse des Motorlagers 1
- 3: Hydroeinheit
- 4: hydraulisches Dämpfungselement der Hydroeinheit 3
- 5: Gummielement der Hydroeinheit 3
- 6: Befestigungsplatte
- 7: Führungsschienen der Befestigungsplatte 6
- 8: Führung Nuten des Gehäuses 2
- 9: Rastnase der Befestigungsplatte 6
- 10: Federzunge
- 11: für die Befestigung der Hydroeinheit vorgesehene Fläche des Gehäuses 2
- 12: Anschlag
- 13: Spalt zwischen Anschlag 12 und Federzunge 10

## Patentansprüche

1. Motorlager (1), aufweisend eine Hydroeinheit (3) und ein Gehäuse (2), wobei die Hydroeinheit (3) mindestens ein Hydroelement (4) und mindestens ein Gummielement (5) umfasst und wobei Gehäuse (2) und Hydroeinheit (3) miteinander fest verbunden sind, **dadurch gekennzeichnet, dass** die Hydroeinheit (3) eine Aussparung oder einen Hinterschnitt (9) aufweist und dass das Gehäuse (2) ein Federelement (10) aufweist und die Ausssparung oder der Hinterschnitt (9) der Hydroeinheit (3) in montiertem Zustand mit dem Federelement (10) des Gehäuses (2) in Eingriff steht, sodass zwischen Hydroeinheit (3) und Gehäuse (2) eine feste, formschlüssige Verbindung (13) ausgebildet ist.

2. Motorlager (1) nach Anspruch 1, **dadurch gekennzeichnet, dass** die Aussparung oder der Hinterschnitt (9) an der Hydroeinheit (3) direkt im Gummielement (5) ausgebildet ist.

3. Motorlager (1) nach Anspruch 1, **dadurch gekennzeichnet, dass** die Aussparung oder der Hinterschnitt (9) in einer Befestigungsplatte (6) angeordnet sind, die fest mit dem Gummielement (5) der Hydroeinheit (3) verbunden ist.

4. Motorlager (1) nach Anspruch 1, **dadurch gekennzeichnet, dass** die Aussparung oder der Hinterschnitt (9) am Hydroelement (4) der Hydroeinheit (3) verbunden ist.

5. Motorlager (1) nach einem der vorstehenden Ansprüche, **dadurch gekennzeichnet, dass**, dass das Federelement (10) im Gehäuse (2) als Federzunge (10) aus Metall ausgebildet ist.

6. Motorlager (1) nach einem der vorstehenden Ansprüche, **dadurch gekennzeichnet, dass** das Federelement (10) als separates Bauteil mit dem Gehäuse (2) fest verbunden ist.
